# EUROPÄISCHE PATENTSCHRIFT

(11) **EP 3 656 012 B1**
(45) Veröffentlichungstag und Bekanntmachung des Hinweises auf die Patenterteilung: **05.08.2020**
(21) Anmeldenummer: 19702346.8
(22) Anmeldetag: 18.01.2019
(51) Int. Cl.: H01M 8/248

(54) **BRENNSTOFFZELLENSTAPEL MIT SPANNVORRICHTUNG**
FUEL CELL STACK WITH TENSIONING ARRANGEMENT
EMPILEMENT DE PILES À COMBUSTIBLE AYANT UN ARRAGEMENT DE SERRAGE

(30) Priorität: 31.01.2018 DE 102018201436
(43) Veröffentlichungstag der Anmeldung: 27.05.2020
(73) Patentinhaber: Audi AG, 85045 Ingolstadt (DE); VOLKSWAGEN AG, 38440 Wolfsburg (DE)
(72) Erfinder: JILANI, Adel, Burnaby, British Columbia V5J 5J8 (CA); SANKAR VOOSANI KRISHNA, Siva, Burnaby, British Columbia V5J 5J8 (CA)
(86) Internationale Anmeldenummer: PCT/EP2019/051203
(87) Internationale Veröffentlichungsnummer: WO 2019/149543

(56) Entgegenhaltungen:
- WO-A1-2005/045981
- JP-A- 2002 063 929
- JP-A- 2013 020 740
- US-A1- 2006 093 890

## Beschreibung

Die Erfindung betrifft einen Brennstoffzellenstapel, der ein Nachspannen ermöglicht, insbesondere durch Anpassen der aufgrund zumindest eines Spannelements auf den Brennstoffzellenstapel wirkenden Kompressionszugkraft. Darüber hinaus betrifft die Erfindung ein Fahrzeug mit einem solchen Brennstoffzellenstapel.

Brennstoffzellen nutzen die chemische Umsetzung eines Brennstoffs mit Sauerstoff zu Wasser zum Erzeugen elektrischer Energie. Hierfür weisen Brennstoffzellen eine Membran-Elektroden-Anordnung (MEA - *membrane electrode assembly*) mit einer Membran-Elektroden-Einheit auf.

Die Membran-Elektroden-Einheit wird durch eine protonenleitende Membran, PEM, gebildet, an der beidseitig katalytische Elektroden angeordnet sind. Dabei trennt die Membran den der Anode zugeordneten Anodenraum und den der Kathode zugeordneten Kathodenraum voneinander und isoliert diese elektrisch. Auf den nicht der Membran zugewandten Seiten der Elektroden können zudem Gasdiffusionslagen angeordnet sein.

Im Betrieb der Brennstoffzelle wird ein wasserstoffhaltiger Brennstoff der Anode zugeführt, an der eine elektrochemische Oxidation von H₂ zu H⁺ unter Abgabe von Elektronen erfolgt. Über die elektrolytische Membran erfolgt ein wassergebundener oder wasserfreier Transport der Protonen H⁺ aus dem Anodenraum in den Kathodenraum. Die an der Anode bereitgestellten Elektronen werden über eine elektrische Leitung der Kathode zugeleitet.

Der Kathode wird ein sauerstoffhaltiges Betriebsmedium zugeführt, sodass dort eine Reduktion von O₂ zu O₂⁻ unter Aufnahme der Elektronen erfolgt. Diese Sauerstoffanionen reagieren im Kathodenraum mit den über die Membran transportierten Protonen unter Bildung von Wasser.

Ein Brennstoffzellenstapel ist in der Regel durch eine Vielzahl in einem Stapel (*stack*) in Stapelrichtung übereinander angeordneter MEA gebildet, deren elektrische Leistungen sich addieren. Zwischen den Membran-Elektroden-Anordnungen sind üblicherweise Bipolarplatten angeordnet, die eine Versorgung der einzelnen MEA mit den Reaktanten und einer Kühlflüssigkeit sicherstellen sowie als elektrisch leitfähiger Kontakt zu den Membran-Elektroden-Anordnungen fungieren.

Zwischen den Membran-Elektroden-Einheiten und den Bipolarplatten sind Dichtungen angeordnet, um die Anoden- und Kathodenräume nach außen abzudichten und ein Austreten der Betriebsmedien aus dem Stapel zu verhindern. Diese Dichtungen sind auf den Membran-Elektroden-Einheiten, den Bipolarplatten oder diesen beiden Komponenten vorgesehen.

Zum dauerhaften Abdichten des Stapels und zum Gewährleisten des elektrischen Kontakts zwischen Bipolarplatten und Membran-Elektroden-Anordnungen wird der Brennstoffzellenstapel vor der Inbetriebnahme verpresst. Ferner werden Zugelemente eingesetzt, um den Brennstoffzellenstapel auch während des Betriebs zu verpressen.

Aus dem Stand der Technik sind verschiedene Zugelemente bekannt. Beispielsweise können zwei an den Enden des Brennstoffzellenstapels angeordneten Endplatten mittels Zugelementen verbunden werden. Durch Einleiten von Zugkräften über die Zugelemente in die Endplatten wird der Brennstoffzellenstapel zusammengepresst. Als Zugelemente werden beispielsweise Gewindestäbe, Zuganker, Ketten oder dergleichen eingesetzt.

Ebenfalls bekannt ist die Verwendung von gespannten streifen- oder bandförmigen elastischen Spannelementen, die entweder mit den Endklappen verbunden sind oder den Stapel in zumindest einem Querschnitt (in Stapelrichtung) zumindest teilweise umlaufen. Hinsichtlich der Ausgestaltung und Befestigungsmöglichkeiten derartiger elastischer Spannelemente (Zugelemente) wird beispielsweise auf die EP 1 870 952 A2 verwiesen, auf deren Inhalt hiermit vollumfänglich Bezug genommen wird.

Insbesondere in den aktiven Bereichen des Brennstoffzellenstapels beziehungsweise der MEAs kann es zu betriebsbedingten Höhenänderungen kommen, die beispielsweise mit der Temperatur und dem Feuchtegehalt des Brennstoffzellenstapels variieren können. Man spricht auch davon, dass der Stapel atmet. Bei der Verwendung elastischer Spannelemente kann zudem die Elastizität dieser Spannelemente mit der Zeit abnehmen. Insbesondere bei metallischen Spannelementen, die den Brennstoffzellenstapel ringförmig umlaufen und somit mehrere 90° Knicke aufweisen, kommt es insbesondere im Bereich dieser Umbiegungen zum Längen der Spannelemente.

Unabhängig von den Höhenänderungen des Brennstoffzellenstapels und der Alterung der Spannelemente muss stets eine ausreichende Kompression des Stapels gewährleistet werden, insbesondere um die Dichtwirkung der eingesetzten Dichtungen zu garantieren. Aus dem Stand der Technik sind daher bereits Mittel bekannt, mit denen versucht werden soll, die Kompression eines Brennstoffzellenstapels dauerhaft zu gewährleisten.

Die DE 10 2006 028 498 A1 offenbart eine Spannvorrichtung für einen Brennstoffzellenstapel mit zumindest einem Zugelement zum Verspannen des Brennstoffzellenstapels und zumindest einem Längendehnungsausgleichselement, welches in ein Zugelement integriert ist oder zwei Zugelemente miteinander verbindet.

Die DE 10 2004 027 694 A1 offenbart einen Brennstoffzellenstapel mit einer Vielzahl von zwischen Endplatten angeordneten Brennstoffzellen. Zwischen einer Endplatte und einem Verspannungsmittel ist ein Spannsystem, insbesondere eine Tellerfeder, angeordnet. Im ungespannten Zustand weist die Tellerfeder eine in Richtung des Spannmittels geöffnete Wölbung auf und im gespannten Zustand liegt sie annähernd plan an der Endplatte an.

Gemäß den vorgenannten Druckschriften sollen Spannungsspitzen, die aufgrund der Ausdehnung des Stapels auftreten, mittels elastischer Elemente vermieden werden. Darüber hinaus soll durch anfängliches Überspannen der elastischen Elemente eine Höhenänderung des Stapels in begrenztem Maße vermieden werden. Die elastischen Elemente unterliegen jedoch selbst einer Alterung und zumindest dadurch ist die mögliche Einstellung der Kompressionskraft ungenau und passiv.

Die DE 10 2010 007 981 A1 offenbart einen Brennstoffzellenstapel mit zwischen zwei Endplatten angeordneten Brennstoffzellen und mindestens einem die Endplatten verbindenden Verspannungsmittel zum Ausüben einer Zugkraft. Zwischen dem Verspannungsmittel und zumindest einer der Endplatten ist ein Befestigungselement angeordnet, das als Excenterelement ausgebildet ist oder ein Excenterelement enthält. Durch Drehen des Befestigungselements soll ein Abstand zwischen den Endplatten verändert und somit eine Zugkraft zwischen den Endplatten angepasst werden.

Die vorgenannte Druckschrift offenbart ein Kompressionssystem mit kompliziertem Aufbau, welches speziell angepasste Endplatten und/oder Verspannungsmittel erfordert. Das Kompressionssystem ist zudem nicht für die Verwendung mit umlaufenden Spannelementen geeignet.

Weitere Lösungen des Standes der Technik zum Ausgestalten eines Spannsystems für einen Brennstoffzellenstapel, das gegebenenfalls ein Nachspannen des Brennstoffzellenstapels ermöglicht, sind in den Druckschriften JP 2013 020740 A, JP 2002 063929 A und WO 2005/045981 offenbart. Diese Ausgestaltungen sind nachteilig wenig kompakt und erschweren somit beispielsweise das Anordnen mehrerer Brennstoffzellenstapel im Verbund.

Der Erfindung liegt nun die Aufgabe zugrunde, die Nachteile des Standes der Technik zu überwinden und eine Lösung zum Nachspannen eines Brennstoffzellenstapels bereitzustellen, welche ohne große Anpassung in bestehende Brennstoffzellenstapel integrierbar ist, insbesondere in solche mit umlaufenden band- oder streifenförmigen Spannelementen.

Diese Aufgabe wird gelöst durch einen Brennstoffzellenstapel mit einer ersten Endplatte und einer zweiten Endplatte und einer Vielzahl von in Stapelrichtung zwischen den zwei Endplatten angeordneten Brennstoffzellen. Ferner weist der Brennstoffzellenstapel zumindest ein in Stapelrichtung zwischen den Endplatten gespanntes elastisches Spannelement auf. Zumindest ein Nachspannelement ist zwischen dem Spannelement, bevorzugt dem gespannten Spannelement (dem Spannelement im gespannten Zustand), und einem Oberflächenabschnitt des Brennstoffzellenstapels, bevorzugt einem Oberflächenabschnitt einer der Endplatten, angeordnet. Das Nachspannelement weist einen Spannkörper und zumindest ein zwischen dem Spannkörper und dem Oberflächenabschnitt angeordnetes Stellelement auf. Bevorzugt sind der Spannkörper und das Stellelement miteinander verbunden, wobei diese Verbindung rein kraftschlüssig erfolgen kann.

Erfindungsgemäß ist ein Abstand zwischen dem Spannkörper und dem Oberflächenabschnitt, bevorzugt ein Abstand in Normalenrichtung des Oberflächenabschnitts, mittels des zumindest einen Stellelements variabel einstellbar. Mit anderen Worten, das zumindest eine Stellelement ist dafür eingerichtet, einen Abstand zwischen dem Spannkörper und dem Oberflächenabschnitt variabel einzustellen. Besonders bevorzugt ist der Abstand zwischen einem Punkt des Nachspannelements, bevorzugt einem Punkt der von dem Oberflächenabschnitt in Normalenrichtung am weitesten entfernt ist, und dem Oberflächenabschnitt mittels des zumindest einen Stellmittels variabel einstellbar.

Darüber hinaus ist der Spannkörper mittels des zumindest einen Stellelements erfindungsgemäß in einem gewählten Abstand, bevorzugt einem gewählten Abstand in Normalenrichtung des Oberflächenabschnitts, zum Oberflächenabschnitt feststellbar (fixierbar). Mit anderen Worten ist das zumindest eine Stellmittel ferner dazu eingerichtet, den Spannkörper in einem variablen Abstand zum Oberflächenabschnitt festzustellen (zu fixieren). Bevorzugt wird durch die Feststellung beziehungsweise Fixierung des Stellelements eine weitere ungewollte Verlagerung des Spannkörpers durch eine vom Stellelement oder Spannelement ausgeübte Kraft vermieden.

Erfindungsgemäß liegt zumindest ein Spannelement zumindest abschnittsweise flächig an einer Oberfläche des Brennstoffzellenstapels an. Bevorzugt weist diese Oberfläche den besagten Oberflächenabschnitt auf, zwischen dem und dem Spannmittel das Nachspannelement angeordnet ist. Bevorzugt handelt es sich um eine Oberfläche oder einen Oberflächenabschnitt der ersten oder zweiten Endplatte. Gemäß der vorliegenden Erfindung ist das Nachspannelement in einer Aussparung der Oberfläche angeordnet. Bevorzugt ist dabei der Spannkörper an die Dimensionen der Aussparung angepasst und besonders bevorzugt ist das Nachspannelement, insbesondere der Spannkörper, in der Aussparung versenkbar ausgebildet. Ist das Nachspannelement in einer Aussparung der Oberfläche angeordnet, befindet sich der besagte Oberflächenabschnitt bevorzugt in der Aussparung.

Der Brennstoffzellenstapel gemäß der Erfindung ermöglicht somit ein Nachspannen des zumindest einen Spannelements durch Vergrößern des festen Abstands zwischen dem Spannkörper des Nachspannelements und einem Oberflächenabschnitt des Brennstoffzellenstapels mittels zumindest eines Stellelements. Dies bewirkt ein Längen des elastischen Spannelements, wodurch die von diesem auf den Brennstoffzellenstapel ausgeübte Kompressionszugkraft ansteigt. Bevorzugt ist das elastische Spannelement des Brennstoffzellenstapels im Hook'schen Bereich gespannt. Ferner bevorzugt ermöglicht das erfindungsgemäße Nachspannelement ein Nachspannen des Spannelements in einer Stapelrichtung (S) des Brennstoffzellenstapels und/oder quer zu einer Stapelrichtung (S) des Brennstoffzellenstapels.

Die Erfindung ermöglicht ferner vorteilhaft, dass das Nachspannelement in einer ersten Konfiguration komplett in der Aussparung versenkt ist. Somit liegt das Spannelement eben und flächig an der Oberfläche an. Ferner weist das Nachspannelement eine zweite Konfiguration auf, in der es aus der Aussparung heraus und die Oberfläche überragt. Somit liegt das Spannmittel nur noch abschnittsweise eben und flächig an der Oberfläche an und ist im Bereich der Aussparung durch das Nachspannelement in einer Normalenrichtung der Oberfläche gestreckt (gedehnt oder gelängt). Durch das Längen des Spannmittels nimmt die von diesem ausgeübte Kompressionszugkraft wie bei einer Feder zu. Bevorzugt ist das Nachspannelement beim Spannen der Spannmittel nicht vollständig in der Aussparung versenkt. Somit ist durch Versenken des Spannkörpers ein Verringern der Kompressionskraft, beispielsweise bei einem betriebsbedingten Anstieg der Stapelhöhe, möglich.

Bei dem Spannelement handelt es sich bevorzugt um ein aus dem Stand der Technik bekanntes elastisches Spannelement, welches jeweils an den Endplatten des Brennstoffzellenstapels befestigt ist oder den Brennstoffzellenstapel in zumindest einem Querschnitt entlang der Stapelrichtung im Wesentlichen vollständig (mit anderen Worten ringförmig) umläuft. Dabei liegt das Spannelement zumindest abschnittsweise flächig an einer Oberfläche des Brennstoffzellenstapels an. Das Nachspannelement ersetzt vorzugsweise einen Abschnitt einer solchen Oberfläche und/oder ist bevorzugt in einer Aussparung einer solchen Oberfläche angeordnet.

Das Spannelement ist bevorzugt als band- oder streifenförmiges flexibles und/oder elastisches Spannelement ausgebildet, wie beispielsweise aus der EP 1 870 952 A2 bekannt. Das Spannelement besteht bevorzugt aus einem elastischen Kunststoff, einem elastischen Polymer (z.B. Nylon) oder einem elastischen Metall, und weist bei Standardbedingungen ein Elastizitätsmodul > 1 GPa und besonders bevorzugt > 5 GPa entlang der Spannrichtung auf.

Das Spannelement ist ferner bevorzugt stoffschlüssig und/oder mittels mindestens eines Spannmittels an zumindest einer Stapelendplatte fixiert. Um eine einfache Demontage des Brennstoffzellenstapels zu gewährleisten, ist das Spannelement bevorzugt an mindestens einer Endplatte des Stapels lösbar fixiert. Besonders bevorzugt ist das Spannelement an der Endplatte eingehängt. Hierfür weist die Endplatte bevorzugt zumindest einen Einhängehaken zum Einhängen des Spannelements an einer seiner Seitenflächen oder auf seiner in Stapelrichtung nach außen weisenden Oberfläche auf. Ebenfalls bevorzugt weist das Spannelement mindestens eine Einhängeöffnung zum Einhängen an einem Einhängehaken auf.

Alternativ erstreckt sich das zumindest eine Spannelement in einem Querschnitt in Stapelrichtung zumindest im Wesentlichen um einen Umfang des Brennstoffzellenstapels. Dabei ist ein Spannelement an mindestens einem seiner Endbereiche an einem anderen Endbereich desselben Spannelements oder an einem anderen Spannelement fixiert. Das Spannelement kann also ringförmig geschlossen ausgebildet sein.

Besonders bevorzugt ist der Endbereich des zumindest einen Spannelements formschlüssig mit einem anderen Endbereich desselben Spannelements verbunden, beispielsweise durch eine Crimpverbindung. Ebenfalls bevorzugt ist ein Endbereich des zumindest einen Spannelements mittels einer Befestigungsvorrichtung an einem anderen Endbereich desselben oder eines anderen Spannelements fixiert. Besonders bevorzugt ist ein Endbereich des zumindest einen Spannelements an einem anderen Endbereich desselben oder eines anderen Spannelements verschweißt.

Besonders bevorzugt weist der Brennstoffzellenstapel eine Mehrzahl von in Stapelrichtung zwischen den Endplatten gespannten Spannelementen auf. Dabei ist ein Nachspannelement zwischen einem oder mehreren, bevorzugt zwischen allen, der Spannelemente und einer Mehrzahl von Oberflächenabschnitten des Brennstoffzellenstapels angeordnet.

Der Spannkörper des Nachspannelements ist bevorzugt an die Form und das Material des Spannelements angepasst. Bei der Verwendung von band- oder streifenförmigen Spannelementen weist der Spannkörper bevorzugt eine an die Breite des Spannelements angepasste Breite auf. Ferner weist der Spannkörper bevorzugt zumindest eine gerundete Kante auf, die mit dem Spannmittel in Kontakt tritt. Eine aufgrund der Verlagerung des Spannkörpers mittels des zumindest einen Stellmittels auf das Spannmittel ausgeübte Kraft wird so vorteilhaft gleichmäßig auf das Spannmittel verteilt.

In einer bevorzugten Ausführungsform des Brennstoffzellenstapels ist das zumindest eine Stellelement aus dem Spannkörper ausfahrbar ausgebildet. Mit anderen Worten ist das Stellelement in einer ersten Konfiguration zumindest abschnittsweise in dem Spannkörper versenkt und ragt in einer zweiten Konfiguration weiter aus dem Spannkörper hervor als in der ersten Konfiguration. Besonders bevorzugt handelt es sich bei dem zumindest einen Stellelement um einen mittels Mikroaktuatoren aus dem Spannkörper herein- und herausfahrbaren Bolzen. Ebenfalls bevorzugt ist das zumindest eine Stellelement pneumatisch oder hydraulisch aus dem Spannkörper ausfahrbar. Bevorzugt handelt es sich bei dem zumindest einem Stellelement um einen aus dem Spannkörper herein- und herausfahrbaren Gewindestab. Der Gewindestab ist bevorzugt magnetisch drehbar. Alternativ bevorzugt ist das Stellelement, insbesondere der Gewindestab, mittels geeignetem Werkzeug aus dem Spannkörper herausfahrbar, insbesondere drehbar.

Alternativ oder zusätzlich ist das zumindest eine Stellelement expandierbar ausgebildet ist. Beispielsweise ist das Stellelement als Scherenantrieb ausgebildet oder weist einen Scherenantrieb auf. Ebenfalls bevorzugt ist das Stellelement hohlförmig ausgebildet und mittels Einfüllen eines Fluides expandierbar. Ebenfalls bevorzugt ist das zumindest eine Stellelement fernsteuerbar ausgebildet. Das variable Einstellen eines festen Abstands zwischen dem Spannkörper und dem Oberflächenabschnitt erfolgt somit mittels Fernsteuerung, zum Beispiel mittels Funkfernsteuerung.

In einer ebenfalls bevorzugten Ausführungsform weist das zumindest eine Stellelement ein Gewinde auf, welches in eine Gewindebohrung des Oberflächenabschnitts eingreift. In dieser Ausführungsform wird der Abstand zwischen Spannkörper und Oberflächenabschnitt mittels Drehung des Gewindestabs in der Gewindebohrung variabel eingestellt. Ferner bevorzugt ist das zumindest eine Stellelement in dieser Ausführungsform nur kraftschlüssig mit dem Spannkörper verbunden, besonders bevorzugt ist es mit Presspassung zwischen dem Spannkörper und dem Oberflächenabschnitt angeordnet. Das Drehen der Gewindestange erfolgt bevorzugt durch Eingriff mit einem geeigneten Werkzeug. Hierfür ist die Gewindebohrung bevorzugt in einem überstehenden Abschnitt einer Endplatte angeordnet, um einen Werkzeugeingriff zu ermöglichen. Alternativ erfolgt auch hier die Drehung der Gewindestange mittels Fernsteuerung.

Der besagte Oberflächenabschnitt kann an verschiedenen Stellen des Brennstoffzellenstapels angeordnet sein. Ist das zumindest eine Spannelement an jeweils einer Seitenfläche der ersten und zweiten Endplatte mittels Spannmitteln fixiert, befindet sich der Oberflächenabschnitt bevorzugt zwischen den Spannmitteln auf einer Seitenfläche der ersten oder zweiten Endplatte. Ein Nachspannen des Spannelements mittels des zumindest einen Nachspannelements erfolgt dann bevorzugt in einer Richtung quer zur Stapelrichtung (S) des Brennstoffzellenstapels. Ist das Spannelement hingegen jeweils an einer in Stapelrichtung nach außen weisenden Oberflächen einer ersten und zweiten Endplatte fixiert oder ringförmig geschlossen ausgebildet, dann läuft es über eine Kante und Seitenfläche der Endplatte hinweg zur gegenüberliegenden Endplatte. Dann befindet sich der Oberflächenabschnitt bevorzugt auf einer der nach außen weisenden Oberflächen der ersten oder zweiten Endplatte und/oder auf einer Seitenfläche der ersten oder zweiten Endplatte. Befindet sich der Oberflächenabschnitt auf einer der nach außen weisenden Oberflächen der ersten und/oder zweiten Endplatte erfolgt ein Nachspannen des Spannelements mittels des Nachspannelements bevorzugt in einer Richtung parallel zu der Stapelrichtung (S).

In einer besonders bevorzugten Ausführungsform ist die Aussparung in einer in Stapelrichtung außenliegenden Kante der ersten Endplatte oder der zweiten Endplatte angeordnet. Mit anderen Worten erstreckt sich der besagte Oberflächenabschnitt von einer in Stapelrichtung außenliegenden Kante einer Endplatte entlang der nach außen weisenden Oberfläche und entlang der Seitenfläche dieser Endplatte. Gemäß dieser Ausführungsform ist ein Abstand zwischen dem Spannkörper und einem ersten Oberflächenabschnitt in Normalenrichtung des ersten Oberflächenabschnitts mittels zumindest eines ersten Stellelements variabel einstellbar und feststellbar und ist ein Abstand zwischen dem Spannkörper und einem zweiten Oberflächenabschnitt in Normalenrichtung des zweiten Oberflächenabschnitts mittels zumindest eines zweiten Stellelements variabel einstellbar und feststellbar. Somit ist der Spannkörper vorteilhaft in zwei Richtungen verlagerbar und folglich kann auch das Längen des Spannmittels bevorzugt in mehreren Richtungen gesteuert werden. Die dem Längen im Wesentlichen entgegengesetzte Kompressionszugkraft kann somit ebenfalls in zwei verschiedenen Richtungen nachjustiert werden.

In dieser besonders bevorzugten Ausführungsform weist das Nachspannelement somit zumindest ein erstes Stellelement und zumindest ein zweites Stellelement auf. Ebenfalls bevorzugt weist das Nachspannelement eine Mehrzahl erster und zweiter Stellelemente auf.

Besonders bevorzugt ist der erste Oberflächenabschnitt planparallel zu einer nach außen weisenden Oberfläche und ist der zweite Oberflächenabschnitt planparallel zu einer Seitenfläche der ersten Endplatte oder der zweiten Endplatte. Somit kann der Spannkörper in einer Richtung senkrecht zu der nach außen weisenden Oberfläche der Endplatte und in einer Richtung senkrecht zu der Seitenfläche der Endplatte verlagert werden. Somit kann gezielt ein entlang der Endplatte verlaufender Abschnitt eines Spannmittels oder ein entlang einer Seitenfläche des Brennstoffzellenstapels verlaufender Abschnitt eines Spannmittels gelängt werden. Folglich kann die entlang der Endplatte oder senkrecht zu der Endplatte auf den Brennstoffzellenstapel wirkende Kompressionszugkraft nachgestellt werden. Bevorzugt ist der erste Oberflächenabschnitt senkrecht zu dem zweiten Oberflächenabschnitt. Besonders bevorzugt ist somit ein Nachspannen des Spannelements in Stapelrichtung (S) sowie quer zur Stapelrichtung (S) möglich.

Ferner bevorzugt steht die Endplatte, in deren in Stapelrichtung außenliegender Kante die Aussparung angeordnet ist, in lateraler Richtung, das heißt in einer Richtung parallel zu der nach außen weisenden Oberfläche der Endplatte, über den Brennstoffzellenstapel über. Ferner bevorzugt sind die ersten Stellmittel als Gewindestangen ausgebildet, die mit in dem überstehenden Abschnitt der Endplatte angeordneten Gewindelöchern (Gewindebohrungen) im Eingriff stehen. Somit kann ein Abstand des Spannkörpers senkrecht zur Endplatte durch Verdrehen der Gewindestangen auch mittels Werkzeugeingriff eingestellt werden. Die zweiten Stellmittel sind bevorzugt aus dem Spannkörper ausfahrbar oder expandierbar ausgebildet.

Ebenfalls Gegenstand der Erfindung ist ein Fahrzeug, insbesondere ein elektromotorisch betriebenes Fahrzeug mit einem erfindungsgemäßen Brennstoffzellenstapel, wie vorstehend beschrieben. Der Brennstoffzellenstapel dient dabei insbesondere dem Speisen eines Elektromotors des Fahrzeugs.

Weitere bevorzugte Ausgestaltungen der Erfindung ergeben sich aus den übrigen, in den Unteransprüchen genannten Merkmalen. Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figur 1: eine schematische Darstellung eines Brennstoffzellensystems gemäß dem Stand der Technik;
- Figur 2: einen Brennstoffzellenstapel mit einer Mehrzahl den Stapel komprimierender Spannelemente und einem Nachspannelement gemäß einer Ausführungsform;
- Figur 3: den Brennstoffzellenstapel der Figur 2 mit freigelegtem Nachspannelement;
- Figur 4: eine Detaildarstellung des freigelegten Nachspannelements der Figur 3; und
- Figur 5: eine isolierte Darstellung des Nachspannelements der Figur 3.

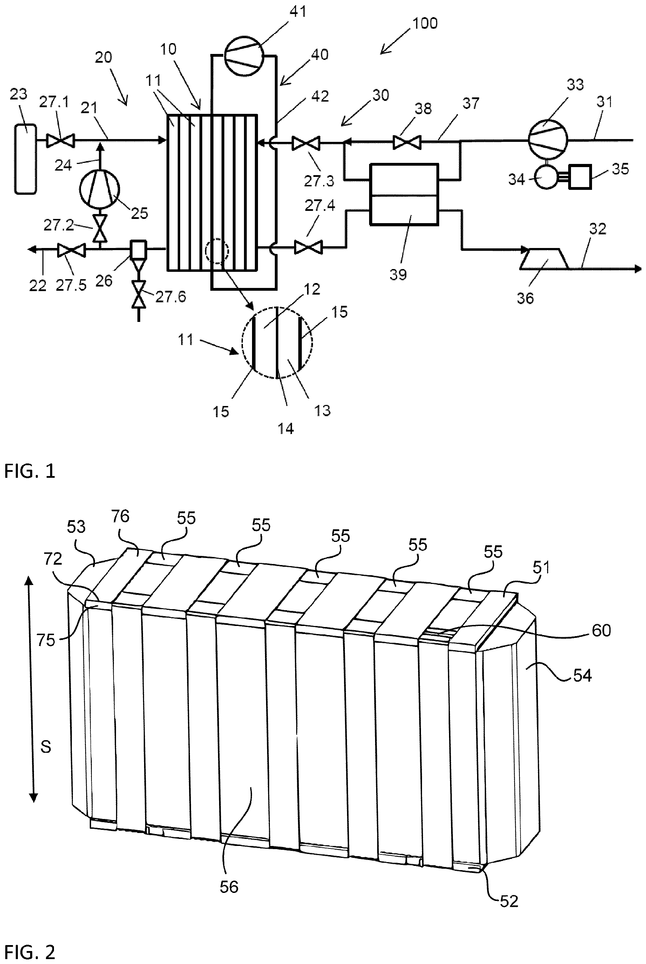

Figur 1 zeigt ein insgesamt mit 100 bezeichnetes Brennstoffzellensystem gemäß dem Stand der Technik. Das Brennstoffzellensystem 100 ist Teil eines nicht weiter dargestellten Fahrzeugs, insbesondere eines Elektrofahrzeugs, das einen Elektrotraktionsmotor aufweist, der durch das Brennstoffzellensystem 100 mit elektrischer Energie versorgt wird.

Das Brennstoffzellensystem 100 umfasst als Kernkomponente einen Brennstoffzellenstapel 10, der eine Vielzahl von in Stapelform angeordneten Einzelzellen 11 aufweist, die durch abwechselnd gestapelte Membran-Elektroden-Anordnungen (MEA) 14 und Bipolarplatten 15 ausgebildet werden (siehe Detailausschnitt). Jede Einzelzelle 11 umfasst somit jeweils eine MEA 14 mit einer hier nicht näher dargestellten ionenleitfähigen Polymerelektrolytmembran sowie beidseits daran angeordneten katalytischen Elektroden. Diese Elektroden katalysieren die jeweilige Teilreaktion der Brennstoffumsetzung. Die Anoden- und Kathodenelektrode sind als Beschichtung auf der Membran ausgebildet und weisen ein katalytisches Material auf, beispielsweise Platin, das auf einem elektrisch leitfähigen Trägermaterial großer spezifischer Oberfläche, beispielsweise einem kohlenstoffbasierten Material, geträgert vorliegt.

Wie in der Detaildarstellung der Figur 1 gezeigt, ist zwischen einer Bipolarplatte 15 und der Anode ein Anodenraum 12 ausgebildet und ist zwischen der Kathode und der nächsten Bipolarplatte 15 der Kathodenraum 13 ausgebildet. Die Bipolarplatten 15 dienen der Zuführung der Betriebsmittel in die Anoden- und Kathodenräume 12, 13 und stellen ferner die elektrische Verbindung zwischen den einzelnen Brennstoffzellen 11 her. Optional können Gasdiffusionslagen zwischen den Membran-Elektroden-Anordnungen 14 und den Bipolarplatten 15 angeordnet sein.

Um den Brennstoffzellenstapel 10 mit den Betriebsmitteln zu versorgen, weist das Brennstoffzellensystem 100 einerseits eine Anodenversorgung 20 und andererseits eine Kathodenversorgung 30 auf.

Die Anodenversorgung 20 des in Figur 1 gezeigten Brennstoffzellensystems 100 umfasst einen Anodenversorgungspfad 21, welcher der Zuführung eines Anodenbetriebsmittels (dem Brennstoff), beispielsweise Wasserstoff, in die Anodenräume 12 des Brennstoffzellenstapels 10 dient. Zu diesem Zweck verbindet der Anodenversorgungspfad 21 einen Brennstoffspeicher 23 mit einem Anodeneinlass des Brennstoffzellenstapels 10. Das Einstellen des Einspeisedrucks des Anodenbetriebsmediums in die Anodenräume 12 des Brennstoffzellenstapels 10 erfolgt über ein Dosierventil 27.1. Die Anodenversorgung 20 umfasst ferner einen Anodenabgaspfad 22, der das Anodenabgas aus den Anodenräumen 12 über einen Anodenauslass des Brennstoffzellenstapels 10 abführt.

Darüber hinaus weist die Anodenversorgung 20 des in Figur 1 gezeigten Brennstoffzellensystems 100 eine Rezirkulationsleitung 24 auf, welche den Anodenabgaspfad 22 mit dem Anodenversorgungspfad 21 verbindet. Die Rezirkulation von Brennstoff ist üblich, um den überstöchiometrisch eingesetzten Brennstoff dem Brennstoffzellenstapel 10 zurückzuführen. In der Rezirkulationsleitung 24 sind eine Rezirkulationsfördereinrichtung 25, vorzugsweise ein Rezirkulationsgebläse, sowie ein Klappenventil 27.2 angeordnet.

In der Anodenversorgung 22 des Brennstoffzellensystems ist ferner ein Wasserabscheider 26 verbaut, um das aus der Brennstoffzellenreaktion entstehende Produktwasser abzuleiten. Ein Ablass des Wasserabscheiders kann mit der Kathodenabgasleitung 32, einem Wassertank oder einer Abgasanlage verbunden sein.

Die Kathodenversorgung 30 des in Figur 1 gezeigten Brennstoffzellensystems 100 umfasst einen Kathodenversorgungspfad 31, welcher den Kathodenräumen 13 des Brennstoffzellenstapels 10 ein sauerstoffhaltiges Kathodenbetriebsmittel zuführt, insbesondere Luft, die aus der Umgebung angesaugt wird. Die Kathodenversorgung 30 umfasst ferner einen Kathodenabgaspfad 32, welcher das Kathodenabgas (insbesondere die Abluft) aus den Kathodenräumen 13 des Brennstoffzellenstapels 10 abführt und dieses gegebenenfalls einer nicht dargestellten Abgasanlage zuführt.

Zur Förderung und Verdichtung des Kathodenbetriebsmittels ist in dem Kathodenversorgungspfad 31 ein Verdichter 33 angeordnet. In dem dargestellten Ausführungsbeispiel ist der Verdichter 33 als ein hauptsächlich elektromotorisch angetriebener Verdichter 33 ausgestaltet, dessen Antrieb über einen mit einer entsprechenden Leistungselektronik 35 ausgestatteten Elektromotor 34 erfolgt.

Das in Figur 1 gezeigte Brennstoffzellensystem 100 weist ferner ein stromaufwärts des Verdichters 33 in der Kathodenversorgungsleitung 31 angeordnetes Befeuchtermodul 39 auf. Das Befeuchtermodul 39 ist einerseits so in dem Kathodenversorgungspfad 31 angeordnet, dass es von dem Kathodenbetriebsgas durchströmbar ist. Andererseits ist es so in dem Kathodenabgaspfad 32 angeordnet, dass es von dem Kathodenabgas durchströmbar ist. Ein Befeuchter 39 weist typischerweise eine Mehrzahl von wasserdampfpermeablen Membranen auf, die entweder flächig oder in Form von Hohlfasern ausgebildet sind. Dabei wird eine Seite der Membranen von dem vergleichsweise trockenen Kathodenbetriebsgas (Luft) überströmt und die andere Seite von dem vergleichsweise feuchten Kathodenabgas (Abgas). Getrieben durch den höheren Partialdruck an Wasserdampf in dem Kathodenabgas kommt es zu einem Übertritt von Wasserdampf über die Membran in das Kathodenbetriebsgas, das auf diese Weise befeuchtet wird.

Das Brennstoffzellensystem 100 weist ferner einen die Kathodenversorgungsleitung stromaufwärts und stromabwärts des Befeuchters 39 miteinander verbindenden Befeuchterbypass 37 mit einem darin angeordneten Klappenventil als Bypassstellmittel 38 auf. Ferner sind Klappenventile 27.3 und 27.4 stromaufwärts des Brennstoffzellenstapels 10 in der Anodenversorgungsleitung 31 beziehungsweise stromabwärts des Brennstoffzellenstapels 10 in der Anodenabgasleitung 32 angeordnet.

Verschiedene weitere Einzelheiten der Anoden- und Kathodenversorgung 20, 30 sind in Figur 1 aus Gründen der Übersichtlichkeit nicht gezeigt. Beispielsweise kann die Anodenabgasleitung 22 in die Kathodenabgasleitung 32 münden, sodass das Anodenabgas und das Kathodenabgas über eine gemeinsame Abgasanlage abgeführt werden.

Die Figur 2 zeigt eine Detaildarstellung des in Figur 1 dargestellten Brennstoffzellenstapels 10. Der Brennstoffzellenstapel 10 weist eine Mehrzahl von in Stapelrichtung S flächig aufeinander gestapelten Brennstoffzellen auf. In Stapelrichtung ist der Brennstoffzellenstapel 10 von einer ersten Endplatte 51 und einer gegenüberliegenden zweiten Endplatte 52 begrenzt. In einer ersten Richtung quer zur Stapelrichtung S ist der Brennstoffzellenstapel 10 durch Seitenverkleidungen 53, 54 begrenzt. In einer zweiten Richtung quer zur ersten Richtung und quer zur Stapelrichtung S ist der Brennstoffzellenstapel 10 durch Seitenverkleidungen 56 begrenzt.

Der in Figur 2 gezeigte Brennstoffzellenstapel 10 ist über eine Mehrzahl von insgesamt fünf Spannelementen 55 komprimiert. Jedes Spannelement 55 umläuft dabei einen Querschnitt des Brennstoffzellenstapels 10 vollständig, wobei es die Endplatten 51, 52 sowie die Seitenverkleidungen 56 überstreicht. Die Spannelemente 55 liegen dabei zumindest an den Endplatten 51, 52 an und jedes Spannelement 55 ist in einem Bereich der oberen Endplatte 51 mit sich selbst verschweißt.

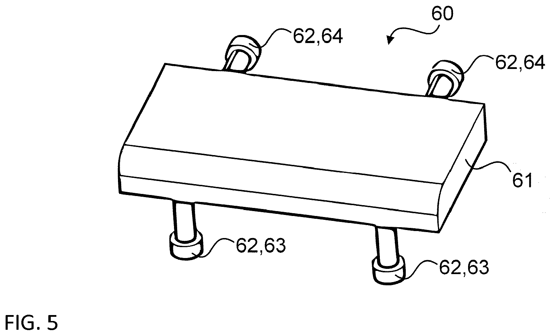

Wie in den Figuren 2, 3 und 4 dargestellt, ist unter einem der Spannelemente 55 ein Nachspannelement 60 gemäß einer Ausführungsform der Erfindung angeordnet. Eine isolierte Darstellung dieses Nachspannelements 60 ist in der Figur 5 gegeben. Wie in Figur 2 dargestellt, zeichnet sich das Nachspannelement 60 nach außen durch eine leichte Verformung des Spannelements 55 ab. Das Nachspannelement 60 weist einen Spannkörper 61 und insgesamt 4 Stellelemente 62 auf.

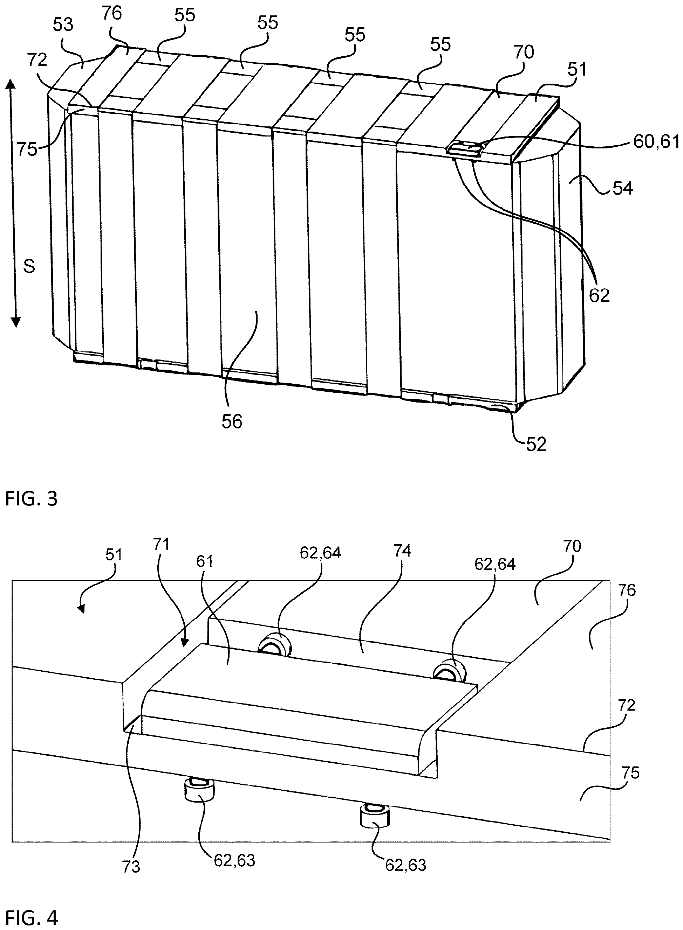

Wie insbesondere in den Figuren 3 und 4 gezeigt, ist jedes Spannelement 55 in einem zugehörigen vertieften Oberflächenabschnitt 70 der ersten (oberen) Endplatte 51 angeordnet. Entsprechende vertiefte Oberflächenabschnitte finden sich auch auf der zweiten (unteren) Endplatte 52 des Brennstoffzellenstapels 10. Somit ist jedes Spannelement 55 gegen seitliches Verrutschen gesichert.

Wie insbesondere in den Figuren 3 und 4 dargestellt, ist eine Aussparung 71 im Bereich einer außenliegenden Kante 72 der ersten Endplatte 51 angeordnet. Die Aussparung 71 erstreckt sich dabei über eine nach außen weisende Oberfläche 76 der Endplatte 51 sowie über eine Seitenfläche 75 der Endplatte 51 und weist einen ersten Oberflächenabschnitt 73 und einen zweiten Oberflächenabschnitt 74 auf.

Das Nachspannelement 60 ist in der Aussparung 71 angeordnet und liegt, wie in Figur 4 dargestellt, auf dem ersten Oberflächenabschnitt 73 der Aussparung 71 auf. Das Nachspannelement 60 weist einen Spannkörper 61 sowie zwei zwischen dem Spannkörper 61 und einem zweiten Oberflächenabschnitt 74 angeordnete zweite Stellelemente 64 auf. Der Spannkörper 61 ist an die Aussparung 71 angepasst und weist eine geringere flächige Ausdehnung und Höhe als die Aussparung 71 auf.

Die zweiten Stellelemente 64 sind aus dem Spannkörper 61 ausfahrbar ausgestaltet und sind insbesondere mittels Fernsteuerung aus dem Spannkörper 61 ausfahrbar. Wie aus der Figur 4 ersichtlich, sind die zweiten Stellelemente 64 in einer neutralen Konfiguration des Nachspannelements 61 nicht vollständig im Spannkörper 61 versenkt. Zudem können die zweiten Stellelemente 64 bei Bedarf auch weiter in den Spannkörper 61 hinein gefahren werden. Durch Hinein- oder Herausfahren der zweiten Stellelemente 64 ist der Spannkörper 61 in einer ersten Richtung parallel zu der nach außen weisenden Oberfläche 76 und normal zur Seitenfläche 75 verlagerbar.

Werden die zweiten Stellelemente 64 aus dem Spannkörper 61 ausgefahren, verschiebt sich der Spannkörper in der ersten Richtung nach außen, so dass ein über den Spannkörper 61 verlaufendes Spannelement 55 in der ersten Richtung nachgespannt wird. Somit nimmt die Kompressionszugkraft entlang der ersten Richtung zu. Werden die zweiten Stellelemente 64 weiter in den Spannkörper 61 hineingefahren, wird dieser durch die Spannung des Spannelements 55 entgegen der ersten Richtung verlagert und die Kompressionszugkraft dieses Spannelements 55 nimmt dadurch ab.

Wie aus den Figuren 3 und 4 ferner ersichtlich, steht die Endplatte 51 in lateraler Richtung über den Brennstoffzellenstapel 10 über. Somit steht auch zumindest ein Teil des ersten Oberflächenabschnitts 73 lateral über die Seitenverkleidung 56 des Brennstoffzellenstapels 10 über. In diesem überstehenden Abschnitt des ersten Oberflächenabschnitts 73 sind zwei Gewindebohrungen angeordnet, die mit den zwei ersten Stellmitteln 63 des Nachspannelements 60 im Eingriff sind.

Die ersten Stellmittel 63 sind jeweils als Gewindestab ausgebildet und aufgrund des Überstands der ersten Endplatte 51 von außen zugängig. Die ersten Stellmittel 63 sind zwischen dem ersten Oberflächenabschnitt 73 und dem Spannkörper 61 mittels Presspassung angeordnet und nicht fest mit dem Spannkörper 61 verbunden. Die ersten Stellmittel 63 sind auf der dem Spannkörper 61 zugewandten Seite flächig ausgedehnt und liegen mit diesen Pressflächen (nicht dargestellt) am ersten Spannkörper 61 an.

Werden die ersten Stellmittel 63 mit einem geeigneten Werkzeug gedreht, so werden sie aufgrund des Eingriffs mit den Gewindebohrungen (nicht dargestellt) im überstehenden Abschnitt der ersten Endplatte 61 entlang oder entgegen der Stapelrichtung S verlagert. Dadurch wird mittels der am Spannkörper 61 anliegenden Pressflächen (nicht dargestellt) entweder mehr oder weniger Druck auf den Spannkörper 61 ausgeübt.

Werden die ersten Stellmittel 63 mit geeignetem Werkzeug so verdreht, dass sie nach oben verlagert werden, beispielsweise in die Gewindebohrungen der ersten Endplatte 51 hinein, wird der Spannkörper 61 in einer zweiten Richtung parallel zur Seitenfläche 75 und normal zur nach außen weisenden Oberfläche 76 verlagert. Somit wird ein über den Spannkörper 61 verlaufendes Spannelement 55 in der zweiten Richtung nachgespannt und die Kompressionszugkraft entlang der zweiten Richtung nimmt zu.

Werden die ersten Stellmittel 63 mit geeignetem Werkzeug so verdreht, dass sie nach unten verlagert werden, beispielsweise aus den Gewindebohrungen der ersten Endplatte 51 hinaus, wird der Spannkörper 61 durch die Spannung des darüber verlaufenden Spannelements 55 entgegen der zweiten Richtung verlagert und die Kompressionszugkraft nimmt ab.

Folglich kann mit dem Nachspannelement 60 die Kompressionszugkraft des Spannelements 55 in der ersten und/oder der zweiten Richtung erhöht oder erniedrigt werden. Das Nachspannelement 60 erlaubt somit das Nachspannen des gealterten elastischen Spannelements 55. Ebenso erlaubt das Nachspannelement 60 das Nachlassen des elastischen Spannelements 55 in Reaktion auf einen Anstieg der Stapelhöhe.

## Patentansprüche

1. Brennstoffzellenstapel (10), aufweisend
eine erste Endplatte (51) und eine zweite Endplatte (52);
eine Vielzahl von zwischen den Endplatten (51, 52) angeordneten Brennstoffzellen (11);
zumindest ein in Stapelrichtung (S) zwischen den Endplatten (51, 52) gespanntes elastisches Spannelement (55);
zumindest ein zwischen dem Spannelement (55) und einem Oberflächenabschnitt (70) des Brennstoffzellenstapels (10) angeordnetes Nachspannelement (60) mit einem Spannkörper (61) und zumindest einem zwischen dem Spannkörper (61) und dem Oberflächenabschnitt (70) angeordneten Stellelement (62),
**dadurch gekennzeichnet, dass**
ein Abstand zwischen dem Spannkörper (61) und dem Oberflächenabschnitt (70) mittels des zumindest einen Stellelements (62) variabel einstellbar und feststellbar ist und
zumindest ein Spannelement (55) zumindest abschnittsweise flächig an einer Oberfläche des Brennstoffzellenstapels (10) anliegt und zumindest ein Nachspannelement (60) in einer Aussparung (71) der Oberfläche angeordnet ist.

2. Brennstoffzellenstapel (10) nach Anspruch 1, wobei der Spannkörper (61) des zumindest einen Nachspannelements (60) in der Aussparung (71) versenkbar ausgebildet ist.

3. Brennstoffzellenstapel (10) nach einem der vorangehenden Ansprüche, wobei das zumindest eine Stellelement (62) aus dem Spannkörper (61) ausfahrbar ausgebildet ist.

4. Brennstoffzellenstapel (10) nach einem der vorangehenden Ansprüche, wobei das zumindest eine Stellelement (62) expandierbar ausgebildet ist.

5. Brennstoffzellenstapel (10) nach einem der vorangehenden Ansprüche, wobei das zumindest eine Stellelement (62) ein in eine Gewindebohrung des Oberflächenabschnitts (70) eingreifendes Gewinde aufweist.

6. Brennstoffzellenstapel (10) nach einem der Ansprüche 1 bis 5,
wobei die Aussparung (71) in einer in Stapelrichtung (S) außenliegenden Kante (72) der ersten Endplatte (51) oder der zweiten Endplatte (52) angeordnet ist,
wobei ein Abstand zwischen dem Spannkörper (61) und einem ersten Oberflächenabschnitt (73) der Endplatte (51, 52) mittels zumindest eines ersten Stellelements (63) und ein Abstand zwischen dem Spannkörper (61) und/oder einem zweiten Oberflächenabschnitt (74) der Endplatte (51, 52) mittels zumindest eines zweiten Stellelements (64) variabel einstellbar und feststellbar ist.

7. Brennstoffzellenstapel (10) nach Anspruch 6, wobei der erste Oberflächenabschnitt (73) senkrecht zu dem zweiten Oberflächenabschnitt ausgerichtet ist (74).

8. Brennstoffzellenstapel (10) nach Anspruch 6 oder 7, wobei der erste Oberflächenabschnitt (73) planparallel zu einer nach außen weisenden Oberfläche (76) der Endplatte (51, 52) und der zweite Oberflächenabschnitt (74) planparallel zu einer Seitenfläche (75) der Endplatte (51, 52) angeordnet ist.

9. Fahrzeug mit einem Brennstoffzellenstapel (10) nach einem der Ansprüche 1 bis 8.

## Claims

1. Fuel cell stack (10), having
a first end plate (51) and a second end plate (52);
a plurality of fuel cells (11) arranged between the end plates (51, 52);
at least one elastic tensioning element (55) tensioned in the stack direction (S) between the end plates (51, 52);
a re-tensioning element (60) arranged between the tensioning element (55) and a surface section (70) of the fuel cell stack (10), said re-tensioning element having a tensioning body (61) and at least one adjusting element (62) arranged between the tensioning body (61) and the surface section (70),
**characterised in that**
a distance between the tensioning body (61) and the surface section (70) can be variably adjusted and fixed by means of the at least one adjusting element (62) and
at least one tensioning element (55) lies flat against a surface of the fuel cell stack (10) at least in sections and at least one re-tensioning element (60) is arranged in a recess (71) of the surface.

2. Fuel cell stack (10) according to claim 1, wherein the tensioning body (61) of the at least one re-tensioning element (60) is designed to be retractable in the recess (71).

3. Fuel cell stack (10) according to any of the preceding claims, wherein the at least one adjusting element (62) is designed to be extendable from the tensioning body (61).

4. Fuel cell stack (10) according to any of the preceding claims, wherein the at least one adjusting element (62) is designed to be expandable.

5. Fuel cell stack (10) according to any of the preceding claims, wherein the at least one adjusting element (62) has a thread engaging into a threaded bore of the surface section (70).

6. Fuel cell stack (10) according to any of claims 1 to 5,
wherein the recess (71) is arranged in an edge (72) of the first end plate (51) or the second end plate (52), which edge is on the outside in the stack direction (S),
wherein a distance between the clamping body (61) and a first surface section (73) of the end plate (51, 52) can be variably adjusted and fixed by means of at least one first adjusting element (63) and a distance between the clamping body (61) and/or a second surface section (74) of the end plate (51, 52) can be variably adjusted and fixed by means of at least one second adjusting element (64).

7. Fuel cell stack (10) according to claim 6, wherein the first surface section (73) is oriented perpendicular to the second surface section (74).

8. Fuel cell stack (10) according to claim 6 or 7, wherein the first surface section (73) is arranged plane-parallel to an outwardly facing surface (76) of the end plate (51, 52) and the second surface section (74) is arranged plane-parallel to a side surface (75) of the end plate (51, 52).

9. Vehicle having a fuel cell stack (10) according to any of claims 1 to 8.

## Revendications

1. Empilement de cellules électrochimiques (10), présentant
une première plaque d'extrémité (51) et une deuxième plaque d'extrémité (52) ;
une pluralité de cellules électrochimiques (11) agencées entre les plaques d'extrémité (51, 52) ;
au moins un élément de serrage (55) élastique serré entre les plaques d'extrémité (51, 52) dans la direction d'empilement (S) ;
au moins un élément de post-serrage (60), agencé entre l'élément de serrage (55) et un tronçon de surface (70) de l'empilement de cellules électrochimiques (10), avec un corps de serrage (61) et au moins un élément de réglage (62) agencé entre le corps de serrage (61) et le tronçon de surface (70),
**caractérisé en ce qu'**
une distance entre le corps de serrage (61) et le tronçon de surface (70) peut être réglée et fixée de manière variable au moyen de l'au moins un élément de réglage (62) et
au moins un élément de serrage (55) s'appuie au moins par endroits et surface contre surface contre une surface de l'empilement de cellules électrochimiques (10) et au moins un élément de post-serrage (60) est agencé dans un évidement (71) de la surface.

2. Empilement de cellules électrochimiques (10) selon la revendication 1, dans lequel le corps de serrage (61) de l'au moins un élément de post-serrage (60) est réalisé de manière à pouvoir être enfoncé dans l'évidement (71).

3. Empilement de cellules électrochimiques (10) selon l'une quelconque des revendications précédentes, dans lequel l'au moins un élément de réglage (62) est réalisé de manière à pouvoir être sorti du corps de serrage (61).

4. Empilement de cellules électrochimiques (10) selon l'une quelconque des revendications précédentes, dans lequel l'au moins un élément de réglage (62) est réalisé extensible.

5. Empilement de cellules électrochimiques (10) selon l'une quelconque des revendications précédentes, dans lequel l'au moins un élément de réglage (62) présente un filetage mordant dans un trou taraudé du tronçon de surface (70).

6. Empilement de cellules électrochimiques (10) selon l'une quelconque des revendications 1 à 5,
dans lequel l'évidement (71) est agencé dans un bord (72), situé à l'extérieur dans la direction d'empilement (S), de la première plaque d'extrémité (51) ou de la deuxième plaque d'extrémité (52),
dans lequel une distance entre le corps de serrage (61) et un premier tronçon de surface (73) de la plaque d'extrémité (51, 52) peut être réglée et fixée de manière variable au moyen d'au moins un premier élément de réglage (63) et une distance entre le corps de serrage (61) et/ou un deuxième tronçon de surface (74) de la plaque d'extrémité (51, 52) peut être réglée et fixée de manière variable au moyen d'au moins un deuxième élément de réglage (64).

7. Empilement de cellules électrochimiques (10) selon la revendication 6, dans lequel le premier tronçon de surface (73) est orienté perpendiculairement au deuxième tronçon de surface (74).

8. Empilement de cellules électrochimiques (10) selon la revendication 6 ou 7, dans lequel le premier tronçon de surface (73) est agencé parallèlement à une surface (76), regardant vers l'extérieur, de la plaque d'extrémité (51, 52) et le deuxième tronçon de surface (74) est agencé parallèlement à une surface latérale (75) de la plaque d'extrémité (51, 52).

9. Véhicule avec un empilement de cellules électrochimiques (10) selon l'une quelconque des revendications 1 à 8.
